Europäisches Patentamt

European Patent Office

Office européen des brevets

(19)

(11) Veröffentlichungsnummer: **0 228 570 B1**

(12) **EUROPÄISCHE PATENTSCHRIFT**

(45) Veröffentlichungstag der Patentschrift: **04.03.92**

(21) Anmeldenummer: **86116398.8**

(22) Anmeldetag: **26.11.86**

(51) Int. Cl.5: **B44B 5/02**, B30B 15/06

(54) **Verfahren und Vorrichtung zum Herstellen einer Prägestruktur auf Pressbändern.**

(30) Priorität: **21.12.85 DE 3545744**

(43) Veröffentlichungstag der Anmeldung:
**15.07.87 Patentblatt 87/29**

(45) Bekanntmachung des Hinweises auf die
Patenterteilung:
**04.03.92 Patentblatt 92/10**

(84) Benannte Vertragsstaaten:
**AT BE CH ES FR GB IT LI NL SE**

(56) Entgegenhaltungen:
EP-A- 0 113 823      BE-A- 505 587
DE-C- 851 009        FR-A- 1 459 851
GB-A- 1 273 265      US-A- 2 470 493
US-A- 4 116 594

PATENT ABSTRACTS OF JAPAN, Band 6, Nr.
263 (M-181)[1141], 22. Dezember 1982; JP-
A-57 156 213 (FUKUBI KAGAKU KOGYO K.K.)
27-09-1982

(73) Patentinhaber: **Firma Theodor Hymmen
Theodor-Hymmen-Strasse 3
W-4800 Bielefeld 1(DE)**

(72) Erfinder: **Der Erfinder hat auf seine Nennung
verzichtet**

(74) Vertreter: **Stracke, Alexander, Dipl.-Ing. et al
Jöllenbecker Strasse 164
W-4800 Bielefeld 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zum Herstellen einer Prägestruktur gemäß dem Oberbegriff des Anspruchs 1 sowie eine Vorrichtung zur Durchführung des Verfahrens.

Es sind Doppelbandpressen bekannt, die durch endlose Preßbänder eine Flächenpressung auf fortschreitende, plattenförmige Werkstücke aufbringen.

Mit einer solchen Doppelbandpresse kann z.B. ein Werkstück mit einer Folie beschichtet werden, wobei die als Stahlbänder ausgebildeten Preßbänder je nachdem, ob die Oberfläche des Werkstücks glatt oder strukturiert sein soll, eine entsprechend vorbereitete, mit Strukturbildnern versehene oder eine glatte Fläche aufweisen. Für den jeweiligen Bedarfsfall sind also die entsprechend ausgebildeten Bänder einzusetzen, da bislang nur Preßbänder zur Verfügung stehen, die entweder eine Prägefläche oder glatte Fläche aufweisen. Naturgemäß ist ein Preßbandwechsel relativ zeitaufwendig und somit teuer, so daß es letztendlich in wirtschaftlicher Hinsicht nur sinnvoll ist, umfangreiche Losgrößen mit einem Preßbandtyp herzustellen. Auf Wünsche und Forderungen bezüglich der Gestaltung von Werkstückoberflächen von seiten der Kunden kann somit nur in ungenügendem Maße eingegangen werden.

Ein weiterer, gravierender Nachteil ist bislang die aufwendige und teure Lagerhaltung von Preßbändern, da für jede unterschiedliche Strukturierung von Werkstückoberflächen separate Preßbänder vorhanden sein müssen. Insbesondere in Anbetracht dessen, daß die Strukturen von Werkstückoberflächen gewissen Modeerscheinungen unterliegen, kann die Standzeit der entsprechenden Preßbänder nicht ausgeschöpft werden, was gleichfalls zu einem unwirtschaftlichen Strukturierungsverfahren beiträgt.

Als Summe der genannten Nachteile ergibt sich, daß eine wünschenswerte gestalterische Freizügigkeit bei der Ausbildung der Preßbänder in wirtschaftlich vertretbarem Rahmen nicht möglich ist.

Das gleiche gilt selbstverständlich auch, wenn anstelle der Preßbänder, die ja dann als Prägebänder fungieren, Preßbleche, -stempel, -walzen oder -folien zur Strukturierung von Werkstückoberflächen eingesetzt werden. In diesem Zusammenhang besteht die genannte Problematik gleichfalls in der Herstellung einer Präge-, Druck- oder Glanzstruktur.

Aus der EP-A0113823 ist eine Doppelbandpresse bekannt, bei der, um eine Strukturierung auf die Oberfläche des Werkstückes aufbringen zu können, ein separates Prägeband zwischen einem Preßband und dem Werkstück durchgeführt wird. Allerdings kann dabei die auf das Werkstück aufzubringende Prägestruktur nur in dem Umfang ausgewählt werden, als sie durch die Musterung des Prägebandes vorgegeben ist. Für darüberhinausgehende kundenspezifische Strukturen muß ein separates Prägeband hergestellt werden, das bei Nichtmehrgebrauch keine weitere Verwendung findet. Hieraus ergeben sich erhebliche wirtschaftliche Nachteile.

Der vorliegenden Erfindung liegt daher die Aufgabe zugrunde, ein Verfahren der gattungsgemäßen Art zu schaffen, das eine Vielzahl von unterschiedlichen Strukturierungen der Werkstückoberflächen mittels eines Trägers ermöglicht und somit die Wirtschaftlichkeit des Verfahrens erheblich verbessert wird.

Diese Aufgabe wird erfindungsgemäß durch die im kennzeichnenden Teil des Anspruchs 1 genannten Merkmale gelöst.

In vielerlei Hinsicht bringt das erfindungsgemäße Verfahren Vorteile mit sich. So ist es nun möglich, in rascher Folge viele unterschiedliche Strukturbildner auf eine einzige Trägerfläche, beispielsweise eines Preßbandes aufzubringen, ohne jeweils den Träger entsprechend den unterschiedlichen Strukturierungen wechseln zu müssen.

Neben der daraus resultierenden, nunmehr überflüssigen Lagerung unterschiedlich ausgebildeter Träger, die natürlich eine wesentliche Kosteneinsparung bedeutet, ist auch ein Trägerwechsel nicht mehr erforderlich, da das Aufbringen der Strukturbildner auf die entsprechende Trägerfläche des Trägers direkt an der Presse erfolgt, so daß ein kontinuierliches Arbeiten der Presse lediglich durch den kurzen Zeitraum unterbrochen wird, in dem die Strukturbildner auf die Trägerfläche aufgebracht werden.

Nach Beendigung einer Strukturbildung, also nach Fertigstellung einer bestimmten Losgröße von Werkstücken oder beispielsweise nach jedem Umlauf eines Preßbandes, werden die Strukturbildner nach einer vorteilhaften Ausgestaltung der Erfindung, von der Trägerfläche entfernt, und zwar so, daß entweder ein neues Strukturbild auf die Trägerfläche aufgebracht werden kann oder diese im glatten Flächenzustand zur Werkstückbearbeitung dient, z.B. beim Einsatz einer Doppelbandpresse zum Beschichten von Spanplatten o.dgl.

Nach einer vorteilhaften Ausgestaltung der Erfindung können die Strukturbildner aus Teilen gebildet sein, die aus Kunststoff, Metall, beispielweise Kupfer, aus faserverstärkten Kunststoffen, die auch elektrisch leitfähig sein können, oder aus Verbundwerkstoffen, z.B. aus Kunststoff-Metallverbundwerkstoffen bestehen. Ebenso können die Teile, aus denen die Strukturbildner gebildet sind, aus Silikon-Acrylat oder aus Epoxid-Acrylat hergestellt sein. Die Verbindung der Strukturbildner mit der Trägerfläche erfolgt dabei durch Erhitzen, Verkleben, Löten, Verschweißen oder durch Aushärten, z.B. durch Eigenwärme des Trägers, durch Heißluftzufuhr oder durch Infrarot-, Ultraviolett-, Laser-, Elektronen- oder radioaktive Bestrahlung. Auch durch den Einsatz von Mikrowellen ist eine Verbindung herstellbar.

Darüber hinaus können die Strukturbildner mittels elektromagnetischer Kräfte auf dem Träger fixiert oder von ihm gelöst werden. Ein weiterer erfindungsgemäßer Gedanke sieht vor, daß die Strukturbildner mit mikroverkapselten Klebstoffen versehen sind, die auf den mit der Trägerfläche gebildeten Berührungsflächen angeordnet sind und in bekannter Weise beim Aufbringen auf die Trägerfläche aktiviert werden, beispielsweise durch Verkleben mit Zweikomponentenklebstoffen, dessen eine Komponente in den druck- oder temperatursensitiven Mikrokapseln vorliegt.

Das Lösen der Strukturbildner von der Trägerfläche kann ebenfalls durch Zuführung von Wärme erfolgen, bei der beispielsweise der Klebstoff oder die Verschweißung soweit überhitzt werden, daß die Verbindung aufgehoben wird. Zur Lösung der Strukturbildner sind aber auch chemische Verfahren möglich, bei denen eine Überhärtung der Verbindungsstellen erfolgt und die dadurch so beeinflußt werden, daß die Verbindung aufgehoben wird. Die Strukturbildner können aber auch durch mechanische Verfahren, beispielsweise durch Schleifen von der Trägerfläche entfernt werden.

Ferner sieht eine weitere vorteilhafte Ausgestaltung des erfindungsgemäßen Verfahrens vor, daß die Strukturbildner unmittelbar vor der Strukturbildung auf die Trägerfläche aufgebracht werden. Dadurch ist es möglich, praktisch sofort nach Beginn des Auftrags der Strukturbildner den Arbeitsvorgang der Strukturbildung zu beginnen, so daß sich kürzestmögliche Unterbrechungen im Produktionsablauf ergeben. Auch ist es möglich, das Strukturmuster hinsichtlich möglicher Beschädigungen zu überwachen und Sofortmaßnahmen einzuleiten, mit denen noch während der Strukturbildung eine Wiederherstellung des beschädigten Musters möglich ist.

Die sich daraus ergebenden wirtschaftlichen Vorteile sindoffensichtlich, weil sich ein Stillsetzen der Presse zum Zwecke der Reparatur des Strukturmusters erübrigt und notwendige Reparaturen an dem Träger ohne Unterbrechung des Arbeitsablaufes vorgenommen werden können.

Nach einer weiteren vorteilhaften Ausgestaltung des erfindungsgemäßen Verfahrens ist vorgesehen, daß die Strukturbildner auf die Trägerfläche aufgetragen, während des Vorgangs der Strukturbildung auf die Werkstückoberfläche übertragen und gleichzeitig ganz oder teilweise mit dem Werkstück dauerhaft verbunden werden.

Auf diese Art und Weise können Oberflächeneffekte auf den Werkstücken im kontinuierlichen Durchlaufverfahren erzeugt werden, da ja die Strukturbildner nach einem Übergang auf die Werkstückoberfläche sofort auf der entsprechenden Trägerfläche neu formiert werden können.

Um mit den einmal auf die Trägerfläche aufgebrachten Strukturbildnern ausreichende Losgrößen von Werkstücken fertigen zu können, ist erfindungsgemäß vorgesehen, die Strukturbildner unmittelbar nach ihrem Aufbringen auf die Trägerfläche mit einer Beschichtung, beispielsweise mit einem Lacküberzug zu versehen, so daß ihre Standzeit soweit erhöht wird, daß ohne Nacharbeit die gewünschte Losgröße gefertigt werden kann.

Eine Vorrichtung zur Durchführung des Verfahrens sieht vor, daß der Auftrag der Strukturbildner auf die Trägerfläche durch ein automatisches Auftragsgerät erfolgt, das von einem angeschlossenen Rechner gesteuert wird. Ein Strukturmuster wird dabei in den Rechner eingegeben und von diesem wiederum dem Auftragsgerät zum entsprechenden Aufbringen der Strukturbildner übermittelt.

Den Variationsmöglichkeiten bei der Gestaltung des Strukturmusters sind durch diese Vorrichtung praktisch keine Grenzen gesetzt.

Es können die verschiedenartigsten Motive gestaltet werden, wobei neben der Möglichkeit, vorgegebene Muster zu speichern und bei Bedarf abzurufen, auch die Möglichkeit der direkten Eingabe in den Rechner besteht. Individuelle Prägungen, auch kleinerer Losgrößen, sind ohne Mehraufwand und somit ohne Mehrkosten möglich.

Nach einer weiteren vorteilhaften Ausgestaltung der Vorrichtung ist das Auftragsgerät als oszillierendes Gerät ausgebildet, wobei dann, wenn der Träger durch ein Preßband gebildet ist und die Strukturbildner bei gleichzeitigem Lauf des Preßbandes aufgebracht werden, die Anordnung der Strukturbildner durch den Rechner in synchroner Anhängigkeit mit dem Lauf des Preßbandes erfolgt. Dabei ist die Arbeitsgeschwindigkeit des Auftragsgerätes sowie die Vorschubgeschwindigkeit des Preßbandes die Grundlage für die durch den Rechner vorgegebene Anordnung der Strukturbildner.

Durch Abtasten des Strukturmusters ist das Auftragsgerät durch den Rechner so steuerbar, daß eine synchrone Anordnung der Strukturbildner erzeugt wird.

Neben der bereits erwähnten Strukturmustervielfalt durch das erfindungsgemäße Verfahren bei gleichzeitiger enormer Kosteneinsparung bietet auch die erfindungsgemäße Vorrichtung diesbezügliche Vorteile, da das Erstellen eines Strukturmusters durch das Auftragsgerät automatisch erfolgt und das Eingeben des gewünschten Strukturmusters in den Rechner unter bestimmten Voraussetzungen von Hilfskräften ausgeführt werden kann.

Die Vorteile des erfindungsgemäßen Verfahrens und der Vorrichtung lassen sich in ihren Ausmaßen erst dann erkennen, wenn man die bekannten, z.T. sehr komplizierten und aufwendigen Verfahren vergleichend gegenüberstellt.

Auch ist durch das erfindungsgemäße Verfahren ein weiteres Problem gelöst, das sich bisher sehr nachteilig auf den Fertigungsprozeß auswirkte. Ein kritischer Bereich, insbesondere bei Preßbändern, die mit Strukturbildnern versehen waren, war die Nahtstelle an dem der Anfangs- und Endbereich der Strukturbildner zusammentrafen. Ein exakter oder gar nahtloser Übergang in diesem Bereich war, wenn überhaupt, dann nur durch aufwendigste Arbeitsschritte zu erzielen.

Beim Aufbringen der Strukturbildner nach dem erfindungsgemäßen Verfahren und mit Hilfe der erfindungsgemäßen Vorrichtung sind diese Probleme nun nicht mehr gegeben, da mit Hilfe des Rechners das Auftragsgerät so steuerbar ist, daß ein nahtloser Übergang ohne weiteres zu erzielen oder - bei ständigem Auftragen und Abnehmen der Strukturbildner - nicht erforderlich ist.

Anhand beigefügter Zeichnungen werden das erfindungsgemäße Verfahren und ein Ausführungsbeispiel der Vorrichtung nach der Erfindung nachfolgend näher beschrieben.

Es zeigen:

| Fig. 1 bis 12 | verschiedene erfindungsgemäße Verfahrenspositionen sowie Ausführungsbeispiele von erfindungsgemäßen Vorrichtungen in jeweils schematischer Darstellung, |
| Fig. 13 | eine Draufsicht auf eine erfindungsgemäße Vorrichtung, |
| Fig. 14 | eine Seitenansicht der Vorrichtung gesehen in Richtung des Pfeiles XIV in Figur 13, |
| Fig. 15 | ein weiteres Ausführungsbeispiel einer erfindungsgemäßen Vorrichtung in schematischer Seitenansicht. |

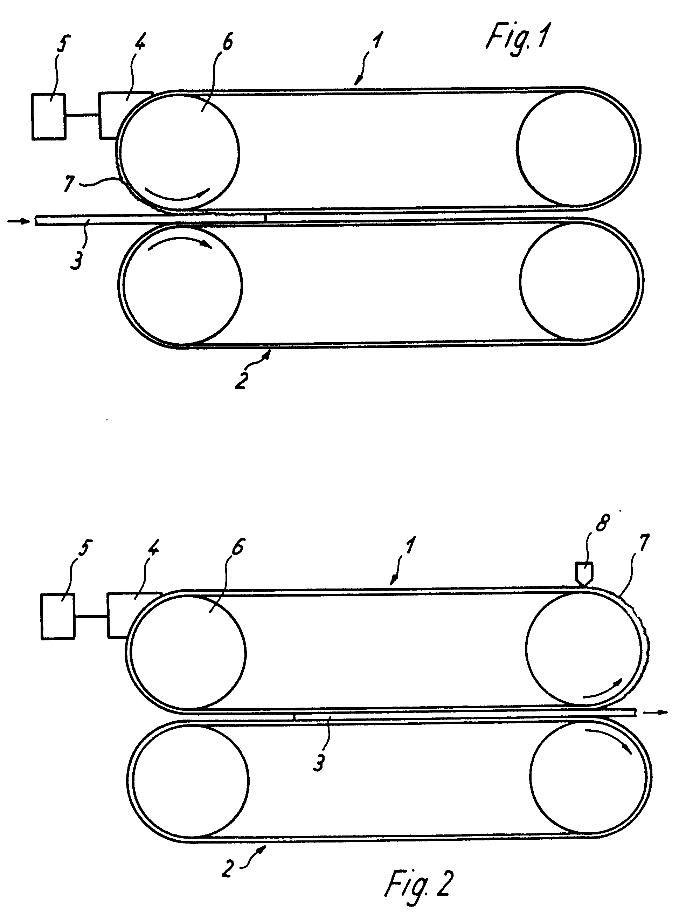

In den Figuren 1 bis 6 sowie 8 und 10 ist jeweils eine schematisch dargestellte Doppelbandpresse zu erkennen, die unter anderem aus zwei sich gegenüberliegenden umlaufenden endlosen Preßbändern 1, 2 besteht, die an ein Werkstück 3 anpreßbar sind.

Das Werkstück 3 kann beispielsweise als Holzplatte, Spanplatte od. dgl. ausgebildet sein. Die Preßbänder 1, 2 können dabei sowohl zum Pressen des Werkstücks 3 eingesetzt werden als auch zum Aufbringen einer Strukturierung auf seiner Oberfläche.

Zu diesem Zweck wird das Preßband 1, das einen Träger darstellt, mit einem Prägemuster 7 versehen, das seine Form beim Durchlaufen des Werkstückes 3 in die entsprechende Oberfläche eindrückt. Dabei wird das Werkstück 3 durch die angedrückten Preßbänder 1, 2 entsprechend der Pfeilrichtung transportiert.

Oberhalb des Arbeitsbereiches des Preßbandes 1, unmittelbar benachbart einer Umlenkrolle 6, die auch als Antriebsrolle eingesetzt werden kann, ist ein Auftragsgerät 4 angeordnet. das mit einem Rechner 5 verbunden ist.

Mittels des Auftragsgerätes 4 wird ein vom Rechner 5 vorgegebenes Prägemuster 7 auf die dem Werkstück 3 zugewandte Trägerfläche des Preßbandes 1 aufgebracht, wobei die aus einer Vielzahl von nebeneinanderliegenden Strukturbildnern, die das Prägemuster 7 bilden, in der Trägerfläche verankert werden. Dabei ist das Prägemuster 7 rasterförmig und erhaben ausgebildet.

In der Figur 2 ist ein weiterer Verfahrensschritt dargestellt, bei dem nach Beendigung des Prägevorganges die Strukturbildner des Prägemusters 7 mittels eines Abstreifers 8 von der Trägerfläche des Preßbandes 1 entfernt werden. Anschließend kann erfindungsgemäß die Trägerfläche mit einem neuen Muster versehen oder mit ihrer glatten Oberfläche zu einer entsprechenden Bearbeitung von weiteren Werkstücken eingesetzt werden.

Prinzipiell können beim Einsatz einer Doppelbandpresse entweder die Trägerflächen beider Preßbänder 1, 2 oder wahlweise nur ein Preßband 1 oder 2 mit Strukturbildnern versehen werden.

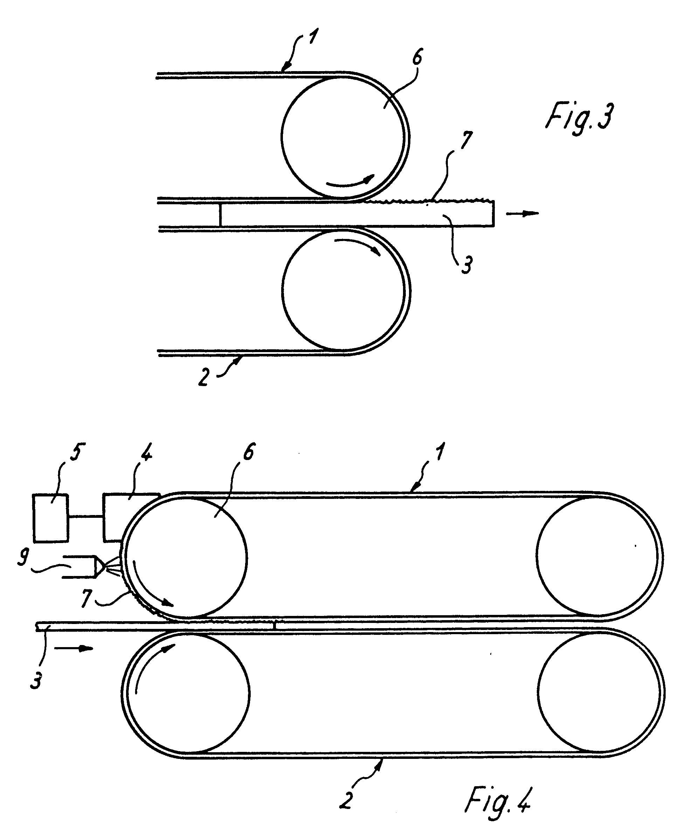

In der Figur 3 ist gezeigt, wie die Strukturbildner 7 nach dem Auftragen auf die Trägerfläche auf die zugewandte Oberfläche des Werkstückes 3 übertragen und mit ihm verbunden werden.

Eine weitere vorteilhafte Ausgestaltung der Erfindung ist in der Figur 4 dargestellt. Dabei werden unmittelbar nach dem Aufbringen der Strukturbildner 7 auf die Trägerfläche des Preßbandes 1 diese mit einem Lacküberzug beschichtet, wobei zwischen dem Werkstück 3 und dem Auftragsgerät 4 eine Spritzdüse 9 angeordnet ist, mittels der der Lack auf die Strukturbildner 7 aufgebracht wird.

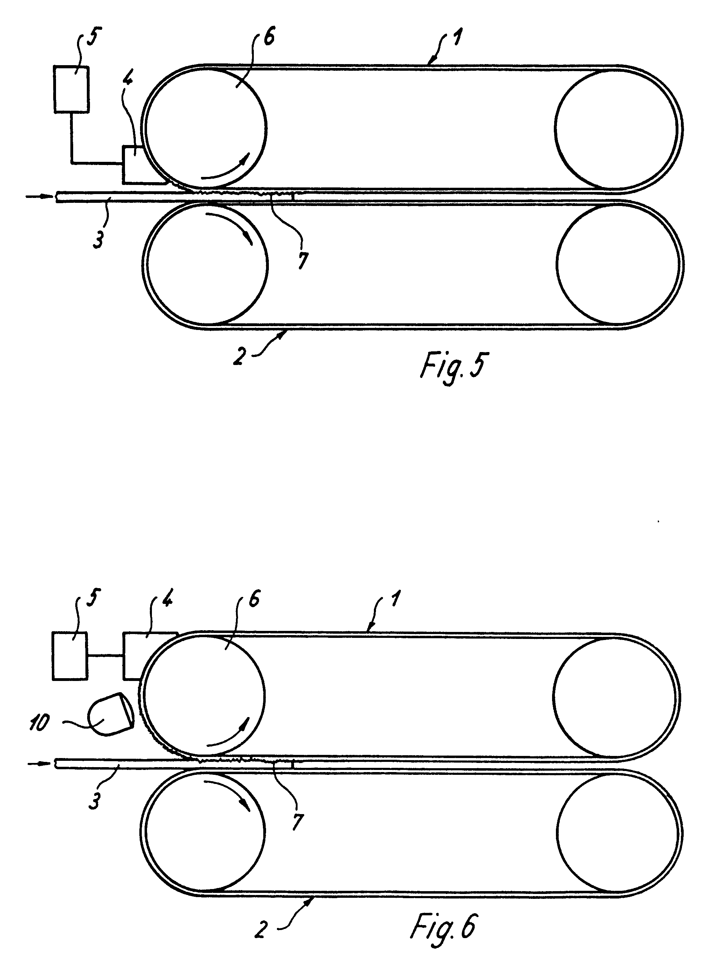

Bei der in der Figur 5 dargestellten Doppelbandpresse ist das Auftragsgerät in unmittelbarer Nähe des Werkstückes 3 am Preßband 1 angeordnet. Dadurch können die Strukturbildner 7 unmittelbar vor dem Prägen auf die dem Werkstück 3 zugewandte Trägerfläche aufgebracht werden.

Eine Möglichkeit der Verbindung der Strukturbildner 7 mit der Trägerfläche ist in der Figur 6 dargestellt. Dabei ist nach dem Auftragsgerät 4 ein Strahler 10 angeordnet, der durch Erzeugung von Heißluft, Infrarot-, Ultraviolett-Laser- oder Elektronenstrahlen, durch radioaktive Strahlen oder durch Mikrowellen bewirkt, daß die Strukturbildner 7 durch Erhitzen, Verkleben, Löten, Verschweißen oder Aushärten mit der Trägerfläche verbunden werden.

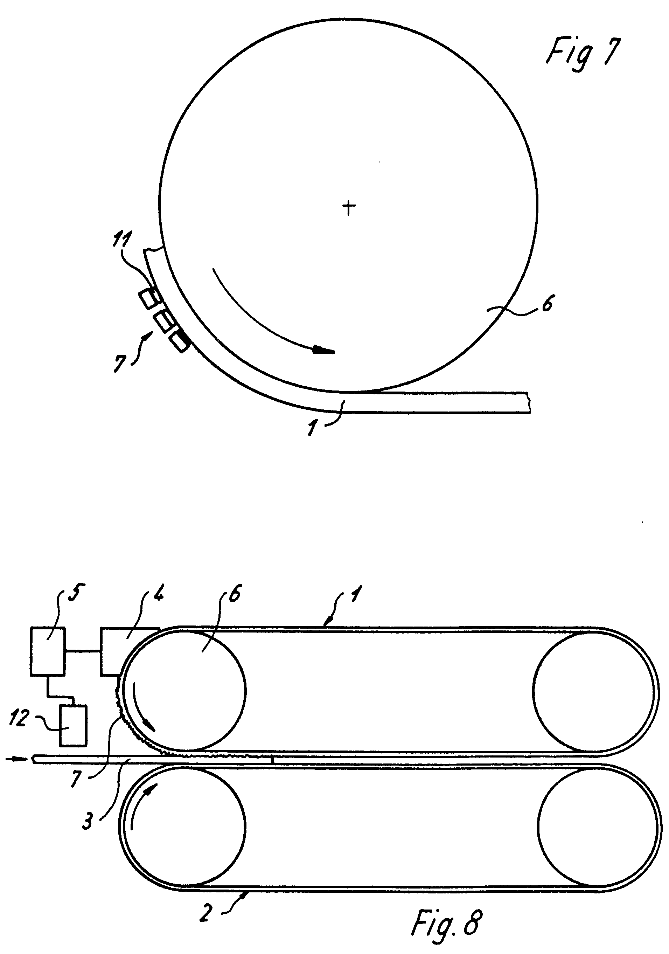

Eine weitere Möglichkeit der Verbindung ist in der Figur 7 gezeigt. Bevorzugt sind dort die Strukturbildner 7 mit der Trägerfläche durch Zweikomponentenklebstoffe verklebt, wobei eine Komponente in druck- oder temperatursensitiven Mikrokapseln 11 vorliegt.

Mittels eines an den Rechner 5 angeschlossenen Lesekopfes 12, wie er in der Figur 8 zu erkennen ist, kann ein auf der entsprechenden Oberfläche des Werkstückes 3 vorhandenes Druckmuster abgetastet und von dem Rechner 5 so verarbeitet werden, daß eine synchrone Steuerung des Auftragsgerätes 4 erfolgt, mit der die Strukturbildner 7 abgestimmt auf das Druckbild des Werkstückes 3 auf die Trägerfläche aufgebracht werden.

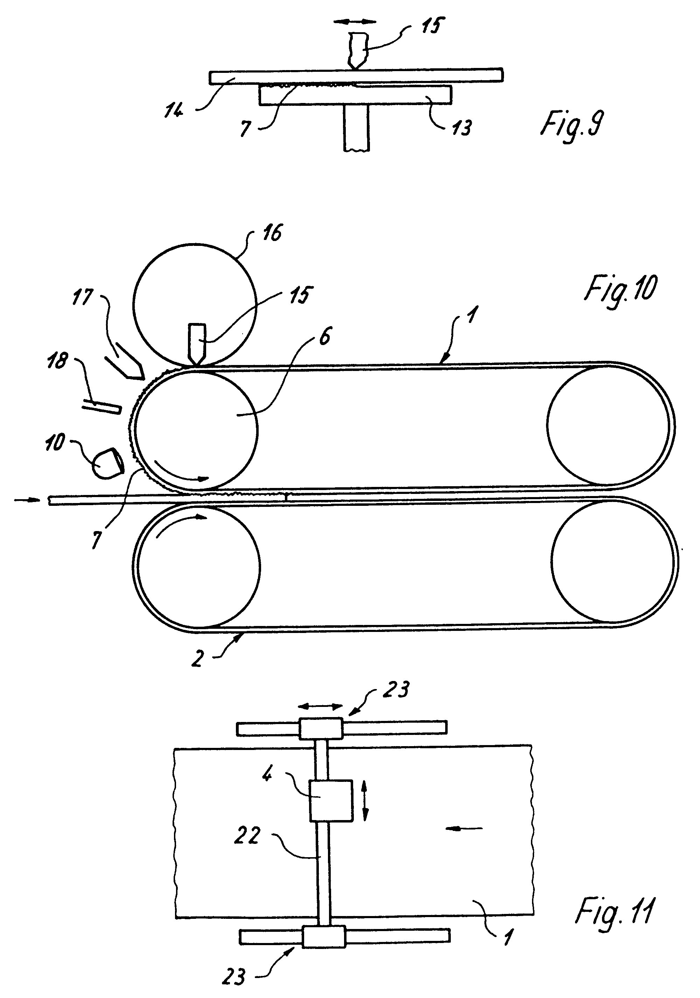

Ein weiteres Ausführungsbeispiel der Erfindung ist in den Figuren 9 und 10 dargestellt. Dabei ist das Auftragsgerät mit einer Siebschablone 14 versehen, die entsprechend der in der Figur 10 dargestellten Ausführung als Siebdruckzylinder 16 ausgebildet ist.

Bei dem in der Figur 9 dargestellten Ausführungsbeispiel ist der Träger 13 eine flachebene Platte, die beispielsweise Bestandteil eines Preßstempels sein kann. Dabei wird ebenso wie bei dem in der Figur 10 dargestellten Beispiel durch die Siebschablone 14 bzw. den Siebdruckzylinder 16 mit Hilfe der Rakel 15 ein Klebstoff auf die Trägerfläche aufgebracht , so daß eine Klebstoffmatrix entsteht, die anschließend mittels eines Bestäubers 17 mit einem verschleißfesten Pulver bestäubt wird. Dem Bestäuber 17 nachgeschaltet ist eine Reinigungsvorrichtung 18, die beispielsweise überschüssige Pulverteile, die sich außerhalb der Kontur der Klebstoffmatrix ansammeln, entfernt. Zum Aushärten der so gebildeten Strukturbildner 7 werden diese nach dem Aufbringen des Pulvers durch Erwärmung ausgehärtet, so daß ein fester Verbund zwischen dem Pulver und der Klebstoffmatrix entsteht, die eine ausreichende Festigkeit gewährleistet.

Neben der dargestellten Möglichkeit eine Klebstoffmatrix durch eine Siebschablone 14 bzw. einen Siebdruckzylinder 16 auf die Trägerfläche aufzubringen, besteht auch die Möglichkeit, diese mit Hilfe eines Laserdruckers oder eines Tintenstrahldruckers herzustellen. Auch können mit einem solchen Drucker die Strukturbildner 7 zunächst in Form eines Pulvermusters auf die Trägerfläche aufgedruckt und anschließend gesintert werden.

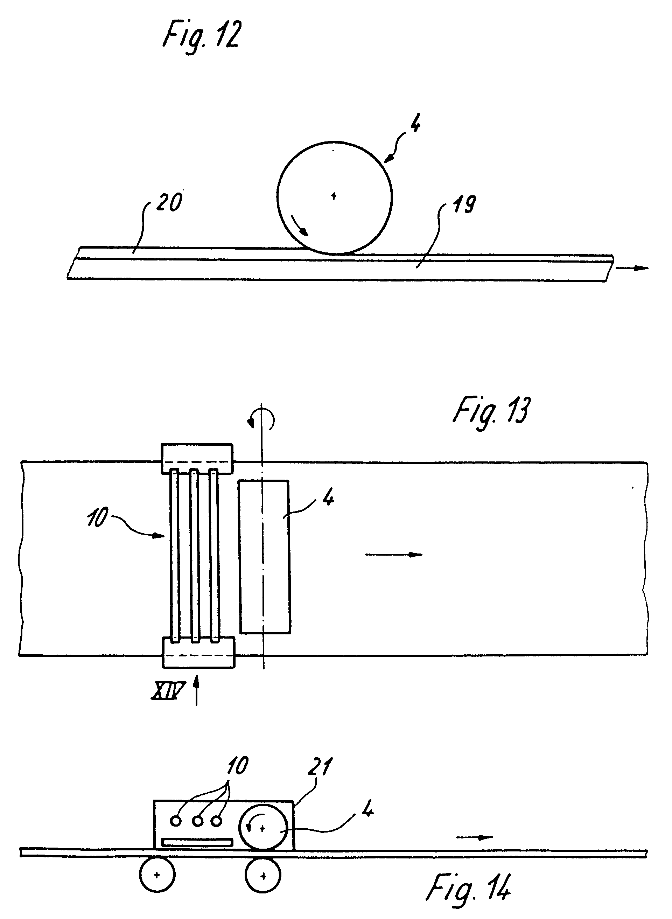

Ein oszillierendes Auftragsgerät 4 ist in der Figur 11 dargestellt. Es ist dabei auf einer Führungsstange 22 quer zur Laufrichtung des Preßbandes 1 verfahrbar festgelegt. Die Führungsstange 22 wiederum ist zu beiden Seiten an jeweils einer Führungseinrichtung 23 so festgelegt, daß sie in Längsrichtung des Preßbandes 1 verfahrbar ist.

Dadurch ergibt sich im Zusammenwirken mit der Laufgeschwindigkeit des Preßbandes 1 die Möglichkeit rechnergesteuerte Muster auf die Trägerfläche aufzubringen.

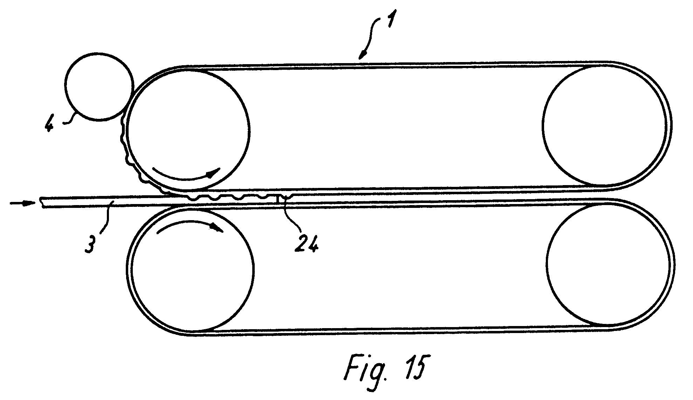

Eine weitere erfindungsgemäße Ausgestaltung des Verfahrens ist in den Figuren 12 bis 14 dargestellt. Dabei ist eine Schicht 20 aus einem niedrig schmelzenden Metall oder einer Metallegierung, beispielsweise eine Zinn-Blei-Legierung, mit einem Träger 19 verbunden. Die Dicke der aufgetragenen Metallschicht entspricht mindestens der Höhe der herzustellenden Strukturbildner. Zunächst werden die Strukturbildner in der Schicht 20 ausgeprägt. Wobei die Schicht 20 entweder fest oder durch partielles Erwärmen, vorzugsweise bis zu einem teigigen Zustand, verformbar sein kann. Die partielle Erwärmung der Schicht 20 erfolgt dabei durch Strahler 10.

Im Fall der Erwärmung der Schicht 20 erfolgt die Herstellung der Strukturbildner durch ein gekühltes Auftragsgerät 4, das im vorliegenden Ausführungsbeispiel als Strukturierungswalze ausgebildet ist. Dadurch wird erreicht, daß die Schicht 20 während der Herstellung der Strukturbildner in einen festen Aggregatzustand übergeht, so daß die Strukturbildner die für ihre Funktion nötige Festigkeit erhalten.

Zum Lösen der Strukturbildner ist erfindungsgemäß vorgesehen, daß die Schicht 20 nach einem Kontaktieren der Strukturbildner mit dem Werkstück durch Erwärmen kurzzeitig verflüssigt wird, so daß die Schicht 20 eine glatte Oberfläche erhält, auf der neue Strukturbildner aufgebracht werden können.

Da das geschmolzene Metall eine starke Affinität zu Sauerstoff besitzt, die zur unerwünschten Bildung von Oxiden führ, kann das Erwärmen der Schicht 20 z. B. in einer inerten Atmosphäre erfolgen, wobei zu diesem Zweck durch eine Kapsel 21 ein gegenüber der Außenatmosphäre abgedichteter Raum geschaffen wird, in dem unter geringem Überdruck eine inerte Atmosphäre erzeugt wird, wobei die Strahler 10 und das Auftragsgerät 4 innerhalb dieses Raumes angeordnet sind.

Uni zu verhindern, daß das verflüssigte Metall seitlich abläuft, werden die Ränder der Schicht 20 beispielsweise durch eine wassergekühlte Maske oder durch entsprechende Anordnungen der Strahler 10 über deren Wärmeeinwirkung geschützt.

Ein weiteres Ausführungsbeispiel einer erfindungsgemäßen Vorrichtung ist in der Figur 15 dargestellt. Dabei wird auf das Preßband 1 mittels des Auftragsgerätes 4, das im vorliegenden Ausführungsbeispiel als Druckwalze ausgebildet ist, in Form eines Musters eine Substanz aufgebracht, die bei Kontakt des Preßbandes 1 mit dem Werkstück 3 unter Einwirkung von Druck und Wärme ein Gas freisetzt, das infolge der Volumenvergrößerung eine Struktur 24 auf der entsprechenden Oberfläche des Werkstückes 3 hervoruft.

**Patentansprüche**

1. Verfahren zum Herstellen einer aus erhabenen Strukturbildnern (7) bestehenden Prägestruktur auf der Außenseite eines eine Trägefläche bildenden Preßbandes (1,2) einer Doppelbandpresse, **dadurch gekennzeichnet,** daß die Strukturbildner (7) in Arbeitsstellung des Preßbandes (1,2) direkt an der Doppelbandpresse mittels eines am Preßband (1,2) angeordneten Auftragsgerätes (4) auf die Trägerfläche aufgebracht, mit dieser verbunden und nach einem Kontaktieren mit einem fortschreitenden Werkstück (3) von der Trägerfläche in Arbeitsstellung des Preßbandes (1,2) entfernt werden.

2. Verfahren nach Anspruch 1, dadurch gekennzeichnet, daß die Strukturbildner (7) auf die Trägerfläche aufgetragen, auf die Werkstückoberfläche übertragen und mit dem Werkstück (3) dauerhaft verbunden werden.

3. Verfahren nach Anspruch 1, dadurch gekennzeichnet, daß unmittelbar nach dem Aufbringen der Strukturbildner (7) diese im gleichen Arbeitsgang beispielsweie mit einem Lacküberzug beschichtet werden.

4. Verfahren nach einem der Ansprüche 1 bis 3, dadurch gekennzeichnet, daß die Strukturbildner (7) nach einmaligem oder mehrmaligem Kontakt mit dem Werkstück (3) wieder vollständig entfernt werden und die Trägerflächen anschließend mit neuen Strukturbildnern versehen werden oder ohne Strukturbildner zur Werkstückbearbeitung eingesetzt werden.

5. Verfahren nach einem der Ansprüche 1 bis 4, dadurch gekennzeichnet, daß die Verbindung der Strukturbildner (7) mit der Trägerfläche durch Erhitzen, Verkleben, beispielsweise mit Zweikomponentenklebstoffen, deren eine Komponente z.B. in druck- oder temperatursensitiven Mikrokapseln (11) vorliegt, Löten, Verschweißen oder durch Aushärten, z.B. durch Eigenwärme des Werkzeugträgers, durch Heißluft oder durch Infrarot-, Ultraviolett-, Laser- oder Elektronenstrahlen, durch radioaktive Strahlen, Mikrowellen, Hochfrequenzwellen oder durch elektromagnetische Kräfte bewirkt wird.

6. Verfahren nach einem der Ansprüche 1 bis 5, dadurch gekennzeichnet, daß die Strukturbildner (7) durch mechanische, beispielsweise Abrakeln oder Abschleifen, durch thermische, chemische oder elektromagnetische Mittel entfernt werden.

7. Verfahren nach Anspruch 1, bei dem die Strukturbildner aus einer mit dem Träger verbundenen Schicht gebildet sind, dadurch gekennzeichnet, daß die Strukturbildner (7) zunächst in der festen oder durch deren partielles Erwärmen verformbaren und aus einem niedrig schmelzenden Metall oder einer Metallegierung bestehenden Schicht (20) ausgeprägt werden, wobei die erwärmte Schicht (20) während des Ausprägens bis in den Verfestigungsbereich abgekühlt wird und nach dem Prägen oder Strukturieren des Werkstückes (3) durch Erwärmen kurzzeitig verflüssigt wird.

8. Vorrichtung zur Durchführung des Verfahrens nach Anspruch 1, dadurch gekennzeichnet, daß zum Aufbringen der Strukturbildner (7) ein automatisches, direkt am Preßband (1,2) angeordnetes Auftragsgerät (4) vorgesehen ist, das von einem angeschlossenem Rechner (5) steuerbar ist.

9. Vorrichtung nach Anspruch 8, dadurch gekennzeichnet, daß das Auftragsgerät (4) als oszillierendes Auftragsgerät ausgebildet ist.

10. Vorrichtung nach Anspruch 8 oder 9, dadurch gekennzeichnet, daß die Anordnung der Strukturbildner (7) in Abhängigkeit von Rechnerprogrammen, der Arbeitsgeschwindigkeit des Auftragsgerätes (4) sowie der Vorschubgeschwindigkeit des Werkzeugträgers (2) veränderbar ist.

11. Vorrichtung nach einem der Ansprüche 8 bis 10, dadurch gekennzeichnet, daß die Anordnung der Strukturbildner (7) durch den Rechner (5) entsprechend der Länge und Breite der Werkstücke (3) synchronisierbar ist.

12. Vorrichtung nach einem der Ansprüche 8 bis 11, dadurch gekennzeichnet, daß der Rechner (5) einen separaten Lesekopf (12) aufweist, mit dem das Druckbild des Werkstückes (3) abtastbar ist, und daß der Rechner (5) Mittel aufweist, mit denen eine zu dem Druckbild synchrone Anordnung der Strukturbildner (7) herstellbar ist.

13. Vorrichtung nach Anspruch 8, dadurch gekennzeichnet, daß die Strukturbildner (7) aus Teilchen bestehen, beispielsweise aus Kunststoff, aus Metall, wie Kupfer, aus faserverstärkten Kunststoffen, aus Verbundwerkstoff, wie Kunststoff-Metallverbundwerkstoff, oder aus elektrisch leitfähigem Kunststoff.

**14.** Vorrichtung nach Anspruch 13, dadurch gekennzeichnet, daß die Strukturbildner aus Silikon-Acrylat, Epoxid-Acrylat od. dgl. besteht.

**15.** Vorrichtung nach Anspruch 8, dadurch gekennzeichnet, daß das Auftragsgerät (4) mit einer Siebschablone (14) versehen ist.

**16.** Vorrichtung nach Anspruch 15, dadurch gekennzeichnet, daß die Siebschablone als Siebdruckzylinder (16) ausgebilde ist.

**17.** Vorrichtung nach Anspruch 8, dadurch gekennzeichnet, daß das Auftragsgerät (4) als Laserdrucker gestaltet ist.

**18.** Vorrichtung nach Anspruch 8, dadurch gekennzeichnet, daß das Auftragsgerät (4) als Prägewalze ausgebildet ist.

**19.** Vorrichtung nach Anspruch 18 zur Durchführung des Verfahrens nach Anspruch 8, dadurch gekennzeichnet, daß zur Erwärmung der Schicht (20) oberhalb der Trägerfläche (19) vor dem Auftragsgerät (4) Strahler (10) angeordnet sind und daß das Auftragsgerät (4) kühlbar ist.

**20.** Vorrichtung nach Anspruch 8, dadurch gekennzeichnet, daß die Strukturbildner aus einer unter Druck und Wärme mit dem Werkstück (3) reagierenden und eine Struktur (24) bildenden Substanz besteht.

**Claims**

**1.** A method of producing an embossing structure consisting of raised structure-forming means (7) on the outside of a press belt (1, 2), which forms a carrier surface, of a double belt press, characterised in that the structure-forming means (7) are applied to the carrier surface in the operating position of the press belt (1) directly at the double belt press by means of an applicator device (4) arranged at the press belt (1, 2), the structure-forming means (7) are joined to the carrier surface, and removed from the carrier surface in an operating position of the press belt (1, 2) after coming into contact with an advancing workpiece (3).

**2.** A method according to claim 1 characterised in that the structure-forming means (7) are applied to the carrier surface, transferred on to the surface of the workpiece and permanently joined to the workpiece (3).

**3.** A method according to claim 1 characterised in that immediately after the application of the structure-forming means (7) they are coated in the same working operation for example with a covering of lacquer.

**4.** A method according to one of claims 1 to 3 characterised in that the structure-forming means (7) are completely removed again after being in contact one or more times with the workpiece (3) and the carrier surfaces are then provided with fresh structure-forming means or are used without structure-forming means for processing a workpiece.

**5.** A method according to one of claims 1 to 4 characterised in that the structure-forming means (7) are joined to the carrier surface by heating, glueing, for example with two-component adhesives of which one component is for example in pressure-sensitive or temperature-sensitive microcapsules (11), soldering, welding or by hardening, for example due to the inherent heat of the tool carrier, by hot air or by infra-red, ultra-violet, laser or electron beams, by radioactive beans, microwaves, high-frequency waves or by electromagnetic forces.

**6.** A method according to one of claims 1 to 5 characterised in that the structure-forming means (7) are removed by mechanical means, for example by being ground off or by being scraped off, or by thermal, chemical or electromagnetic means.

**7.** A method according to claim 1 wherein the structure-forming means are formed from a layer which is joined to the carrier, characterised in that the structure-forming means (7) are firstly embossed in the layer (20) which is hard or deformable by partial heating thereof and which comprises a metal with a low melting point or a metal alloy, wherein during the operation of embossing the structure-forming means in the layer the heated layer (20) is cooled into the solidification range and temporarily liquefied by heating after the operation of embossing or structuring the workpiece (3).

**8.** Apparatus for carrying out the method according to claim 1 characterised in that provided for applying the structure-forming means (7) is an automatic applicator device (4) which is arranged directly at the press belt (1) and which is controllable by a computer (5) connected thereto.

7

9. Apparatus according to claim 8 characterised in that the applicator device (4) is in the form of an oscillating applicator device.

10. Apparatus according to claim 8 or claim 9 characterised in that the arrangement of the structure-forming means (7) is variable in dependence on computer programs, the speed of operation of the applicator device (4) and the forward feed speed of the tool carrier (2).

11. Apparatus according to one of claims 8 to 10 characterised in that the arrangement of the structure-forming means (7) can be synchronised by the computer (5) to correspond to the length and width of the workpieces (3).

12. Apparatus according to one of claims 8 to 11 characterised in that the computer (5) has a separate reading head (12) with which the printed image of the workpiece (3) can be scanned, and that the computer (5) has means with which it is possible to produce an arrangement of the structure-forming means (7) which is synchronous with respect to the printed image.

13. Apparatus according to claim 8 characterised in that the structure-forming means (7) comprise particles, for example of plastics material, metal such as copper, fibre-reinforced plastics materials, composite material such as plastics-metal composite material, or electrically conductive plastics material.

14. Apparatus according to claim 13 characterised in that the structure-forming means comprises silicone-acrylate, epoxy acrylate or the like.

15. Apparatus according to claim 8 characterised in that the applicator device (4) is provided with a screen stencil (14).

16. Apparatus according to claim 15 characterised in that the screen stencil is in the form of a screen printing cylinder (16).

17. Apparatus according to claim 8 characterised in that the applicator device (4) is in the form of a laser printer.

18. Apparatus according to claim 8 characterised in that the applicator device (4) is in the form of an embossing roller.

19. Apparatus according to claim 18 for carrying out the method according to claim 8 characterised in that radiating means (10) are arranged to heat the layer (20) above the carrier surface (19) in front of the applicator device (4) and that the applicator device (4) can be cooled.

20. Apparatus according to claim 8 characterised in that the structure-forming means comprises a substance which reacts with the workpiece (3) under the effect of pressure and heat and forms a structure (24).

**Revendications**

1. Procédé de fabrication d'une structure d'estampage, composée de formeurs de structure (7) en relief, sur le côté extérieur d'une bande de pressage (1, 2) formant surface portante appartenant à une presse à double bande, caractérisé en ce que les formeurs de structure (7) sont posés, en position de fonctionnement de la bande de pressage (1, 2), à proximité immédiate de la presse à double bande, sur la surface portante, au moyen d'un appareil d'application (4) situé près de la bande de pressage (1, 2), sont liés à cette surface, et, en position de fonctionnement de la bande de pressage (1, 2), sont retirés de cette surface de support après contact avec une pièce à traiter (3) en train d'avancer.

2. Procédé selon la revendication 1, caractérisé en ce que les formeurs de structure (7) sont posés sur la surface portante, transférés sur la surface de la pièce à traiter, et sont liés de façon durable à la pièce à traiter (3).

3. Procédé selon la revendication 1, caractérisé en ce qu'immédiatement après l'application des formeurs de structure (7), ceux-ci peuvent être par exemple enduits d'une couche de peinture au cours de la même phase de traitement.

4. Procédé selon l'une quelconque des revendications 1 à 3, caractérisé en ce que les formeurs de structure (7), après un contact unique ou répété avec la pièce à traiter (3), sont à nouveau retirés complètement, et en ce qu'ensuite les surfaces portantes sont pourvues de nouveaux formeurs de structure ou sont utilisées pour traiter la pièce, sans formeurs de structure.

5. Procédé selon l'une quelconque des revendications 1 à 4, caractérisé en ce que la liaison entre les formeurs de structure (7) et la surface portante peut être opérée par réchauffement, collage, par exemple au moyen de colles à deux composants, dont un des composants est présent par exemple dans des micro-capsules (11) sensibles à la pression ou à la température, par brasage, soudage ou par durcissement, par exemple grâce à la propre chaleur du porte-outil, par air chaud ou rayons infra-rouges, ultra-violets, laser ou d'électrons, par rayons radio-actifs, micro-ondes, ondes à haute fréquence ou par forces électromagnétiques.

6. Procédé selon l'une quelconque des revendications 1 à 5, caractérisé en ce que les formeurs de structure (7) sont retirés par des moyens mécaniques, par exemple par raclage ou meulage, par des moyens thermiques, chimiques ou électromagnétiques.

7. Procédé selon la revendication 1, dans lequel les formeurs de structure sont formés par une couche liée au support, caractérisé en ce que les formeurs de structure (7) sont d'abord frappés dans la couche (20) à l'état solide ou déformable par réchauffement partiel et composée d'un métal ou d'un alliage métallique à bas point de fusion, la couche (20) réchauffée étant refroidie jusqu'au stade du durcissement pendant la frappe, et étant liquéfiée par réchauffement pendant un court instant après la frappe ou la texturation de la pièce à traiter (3).

8. Dispositif de mise en oeuvre du procédé selon la revendication 1, caractérisé en ce qu'un appareil d'application (4) automatique, situé à proximité immédiate de la bande de pressage (1, 2), est prévu pour l'application des formeurs de structure (7), appareil qui peut être commandé par un ordinateur (5) qui y est branché.

9. Dispositif selon la revendication 8, caractérisé en ce que l'appareil d'application (4) est conformé en appareil d'application oscillant.

10. Dispositif selon la revendication 8 ou 9, caractérisé en ce qu'il est possible de modifier la disposition des formeurs de structure (7) en fonction des programmes de l'ordinateur, de la vitesse de fonctionnement de l'appareil d'application (4), ainsi que de la vitesse d'avancement du porte-outils (2).

11. Dispositif selon l'une quelconque des revendications 8 à 10, caractérisé en ce que la disposition des formeurs de structure (7) peut être synchronisée par l'ordinateur pour correspondre à la longueur et à la largeur des pièces à traiter (3).

12. Dispositif selon l'une quelconque des revendications 8 à 11, caractérisé en ce que l'ordinateur (5) présente une tête de lecture (12) séparée, avec laquelle on peut détecter le motif d'impression de la pièce à traiter (3), et en ce que l'ordinateur (5) présente des moyens permettant d'obtenir une disposition des formeurs de structure (7) synchronisée avec le motif d'impression.

13. Dispositif selon la revendication 8, caractérisé en ce que les formeurs de structure sont composés de particules, par exemple de matière synthétique, de métal, tel que le cuivre, de matières synthétiques renforcées par des fibres, de matière composite, telle qu'une matière composite synthétique-métallique, ou de matière synthétique conductrice de courant.

14. Dispositif selon la revendication 13, caractérisé en ce que les formeurs de structure sont composés d'acrylate de silicones, d'acrylate de résines époxy ou similaire.

15. Dispositif selon la revendication 8, caractérisé en ce que l'appareil d'application (4) est équipé d'un pochoir (14).

16. Dispositif selon la revendication 15, caractérisé en ce que le pochoir est configuré en cylindre (16).

17. Dispositif selon la revendication 8, caractérisé en ce que l'appareil d'application (4) se présente sous la forme d'une imprimante laser.

18. Dispositif selon la revendication 8, caractérisé en ce que l'appareil d'application (4) est conformé en cylindre d'estampage.

19. Dispositif selon la revendication 18 de mise en oeuvre du procédé selon la revendication 8, caractérisé en ce que des émetteurs (10) sont situés avant l'appareil d'application (4) au-dessus de la surface portante (19) pour réchauffer la couche (20), et en ce qu'il est possible de refroidir l'appareil d'application (4).

20. Dispositif selon la revendication 8, caractérisé en ce que les formeurs de structure sont composés d'une substance formant une structure (24) et réagissant à la pression et à la chaleur avec la pièce à traiter (3).

Fig.1

Fig. 2

*Fig.3*

*Fig.4*

Fig. 5

Fig. 6

Fig 7

Fig. 8

Fig.9

Fig.10

Fig.11

*Fig. 12*

*Fig. 13*

*Fig. 14*

Fig. 15